# EUROPEAN PATENT APPLICATION

(11) **EP 4 475 597 A1**
(43) Date of publication of application: **11.12.2024**
(21) Application number: 24178479.2
(22) Date of filing: 28.05.2024
(51) Int. Cl.: H04W 48/18

(54) **NETWORK SLICING**

(30) Priority: 07.06.2023 FI 20235635
(71) Applicant: Nokia Solutions and Networks Oy, 02610 Espoo (FI)
(72) Inventor: CHEUNG, Benjamin, Berkeley Heights - NJ (US); BUI, Dinh Thai, Châtenay-Malabry (FR); WICHARY, Tomasz, Skierdy (PL); NASEER-UL-ISLAM, Muhammad, Munich (DE); CHOI, NAKJUNG, Florham Park - NJ (US); ADAM, Iris, Munich (DE); SRINIVASARAJU, Srilakshmi, Bangalore (IN)
(74) Representative: Nokia EPO representatives

(57) **Abstract**

According to an example aspect of the present invention, there is provided an apparatus configured to receive, from an access network comprised in a first cellular network, a first network slice identity of a first network slice which is accessible via the access network, determine, based on the first network slice identity, that the first network slice is, in part, serviced in a core network of a second cellular network, and provide to the access network a request for the apparatus to be registered on the first network slice.

## Description

### FIELD

The present disclosure relates to slicing communication networks.

### BACKGROUND

Networks slicing has been used to produce multiple logical cellular communication networks running on the same physical network, wherein the physical network may comprise a radio-access network and a core network.

Individual slices may be configured to provide agreed-upon services and quality of service, so that a utilization rate of the underlying physical network infrastructure may be increased. On the other hand, the capital expenditure in establishing a new network is substantially reduced when instead of building a new physical network, a slice may be obtained from an already existing physical cellular communication network.

### SUMMARY

According to some aspects, there is provided the subject-matter of the independent claims. Some embodiments are defined in the dependent claims. The scope of protection sought for various embodiments of the invention is set out by the independent claims. The embodiments, examples and features, if any, described in this specification that do not fall under the scope of the independent claims are to be interpreted as examples useful for understanding various embodiments of the invention.

According to a first aspect of the present disclosure, there is provided an apparatus comprising at least one processing core and at least one memory storing instructions that, when executed by the at least one processing core, cause the apparatus at least to receive, from an access network comprised in a first cellular network, a first network slice identity of a first network slice which is accessible via the access network, determine, based on the first network slice identity, that the first network slice is, in part, serviced in a core network of a second cellular network, and provide to the access network a request for the apparatus to be registered on the first network slice.

According to a second aspect of the present disclosure, there is provided an apparatus comprising at least one processing core and at least one memory storing instructions that, when executed by the at least one processing core, cause the apparatus at least to provide, to user equipments in a coverage area of a cell controlled by the apparatus, a first network slice identity of a first network slice which is accessible via the apparatus, wherein the first network slice identity indicates that the first network slice is in part serviced in a core network of a second cellular network, distinct from a first cellular network in which the apparatus is comprised, and receive from the user equipment a request for the user equipment to be registered on the first network slice.

According to a third aspect of the present disclosure, there is provided an apparatus comprising at least one processing core and at least one memory storing instructions that, when executed by the at least one processing core, cause the apparatus at least to receive, from an access network of a first cellular network, a request to register a user equipment on a first network slice which uses core network resources of a second cellular network and access network resources of the first cellular network, the apparatus being comprised in a core network of the second cellular network, and determine whether to admit the user equipment to the first network slice.

According to a fourth aspect of the present disclosure, there is provided a method comprising receiving, in an apparatus and from an access network comprised in a first cellular network, a first network slice identity of a first network slice which is accessible via the access network, determining, based on the first network slice identity, that the first network slice is in part serviced in a core network of a second cellular network, and providing to the access network a request for the apparatus to be registered on the first network slice.

According to a fifth aspect of the present disclosure, there is provided a method comprising providing, to user equipments in a coverage area of a cell controlled by an apparatus performing the method, a first network slice identity of a first network slice which is accessible via the apparatus, wherein the first network slice identity indicates that the first network slice is in part serviced in a core network of a second cellular network, distinct from a first cellular network in which the apparatus is comprised, and receiving from the user equipment a request for the user equipment to be registered on the first network slice.

According to a sixth aspect of the present disclosure, there is provided a method comprising receiving, from an access network of a first cellular network, a request to register a user equipment on a first network slice which uses core network resources of a second cellular network and access network resources of the first cellular network, an apparatus performing the method being comprised in a core network of the second cellular network, and determining whether to admit the user equipment to the first network slice.

According to a seventh aspect of the present disclosure, there is provided an apparatus comprising at least one processing core and at least one memory storing instructions that, when executed by the at least one processing core, cause the apparatus at least to determine to deploy a network slice which is serviced in an access network of a first cellular network and a core network of a second cellular network, and configure the network slice to an active state in the access network of the first cellular network and the core network of the second cellular network.

According to an eighth aspect of the present disclosure, there is provided an apparatus comprising means for receiving, in an apparatus and from an access network comprised in a first cellular network, a first network slice identity of a first network slice which is accessible via the access network, determining, based on the first network slice identity, that the first network slice is in part serviced in a core network of a second cellular network, and providing to the access network a request for the apparatus to be registered on the first network slice.

According to a ninth aspect of the present disclosure, there is provided an apparatus comprising means for providing, to user equipments in a coverage area of a cell controlled by an apparatus performing the method, a first network slice identity of a first network slice which is accessible via the apparatus, wherein the first network slice identity indicates that the first network slice is in part services in a core network of a second cellular network, distinct from a first cellular network in which the apparatus is comprised, and receiving from the user equipment a request for the user equipment to be registered on the first network slice.

According to a tenth aspect of the present disclosure, there is provided an apparatus comprising means for receiving, from an access network of a first cellular network, a request to register a user equipment on a first network slice which uses core network resources of a second cellular network and access network resources of the first cellular network, an apparatus performing the method being comprised in a core network of the second cellular network, and determining whether to admit the user equipment to the first network slice.

According to an eleventh aspect of the present disclosure, there is provided a non-transitory computer readable medium having stored thereon a set of computer readable instructions that, when executed by at least one processor, cause an apparatus to at least receive, from an access network comprised in a first cellular network, a first network slice identity of a first network slice which is accessible via the access network, determine, based on the first network slice identity, that the first network slice is in part services in a core network of a second cellular network, and provide to the access network a request for the apparatus to be registered on the first network slice.

According to a twelfth aspect of the present disclosure, there is provided a non-transitory computer readable medium having stored thereon a set of computer readable instructions that, when executed by at least one processor, cause an apparatus to at least provide, to user equipments in a coverage area of a cell controlled by the apparatus, a first network slice identity of a first network slice which is accessible via the apparatus, wherein the first network slice identity indicates that the first network slice is in part serviced in a core network of a second cellular network, distinct from a first cellular network in which the apparatus is comprised, and receive from the user equipment a request for the user equipment to be registered on the first network slice.

According to a thirteenth aspect of the present disclosure, there is provided a non-transitory computer readable medium having stored thereon a set of computer readable instructions that, when executed by at least one processor, cause an apparatus to at least receive, from an access network of a first cellular network, a request to register a user equipment on a first network slice which uses core network resources of a second cellular network and access network resources of the first cellular network, the apparatus being comprised in a core network of the second cellular network, and determine whether to admit the user equipment to the first network slice.

### BRIEF DESCRIPTION OF THE DRAWINGS

FIGURE 1A illustrates an example system in accordance with at least some embodiments of the present invention;
FIGURE 1B illustrates an example system in accordance with at least some embodiments of the present invention;
FIGURE 2A illustrates an example slice identifier in accordance with at least some embodiments of the present invention;
FIGURE 2B illustrates a signalling diagram in accordance with at least some embodiments of the present invention;
FIGURE 3 illustrates an example apparatus capable of supporting at least some embodiments of the present invention;
FIGURE 4 illustrates signalling in accordance with at least some embodiments of the present invention, and
FIGURE 5 is a flow graph of a method in accordance with at least some embodiments of the present invention.

### EMBODIMENTS

Disclosed herein are methods to configure and use network slicing to enable a network slice to use resources of two distinct cellular networks, such as an access network of a first cellular network and a core network of a second cellular network. Such slices are herein referred to as *Core-Sharing Slices,* and they may be used to enable cellular communication in situations where, for example, a core network of the first cellular network has become disabled to an extent it cannot provide core network functionality to a conventional network slice serviced by an access network of the first cellular network. A core network may become disabled to such an extent due to a natural disaster or a cybersecurity breach, for example.

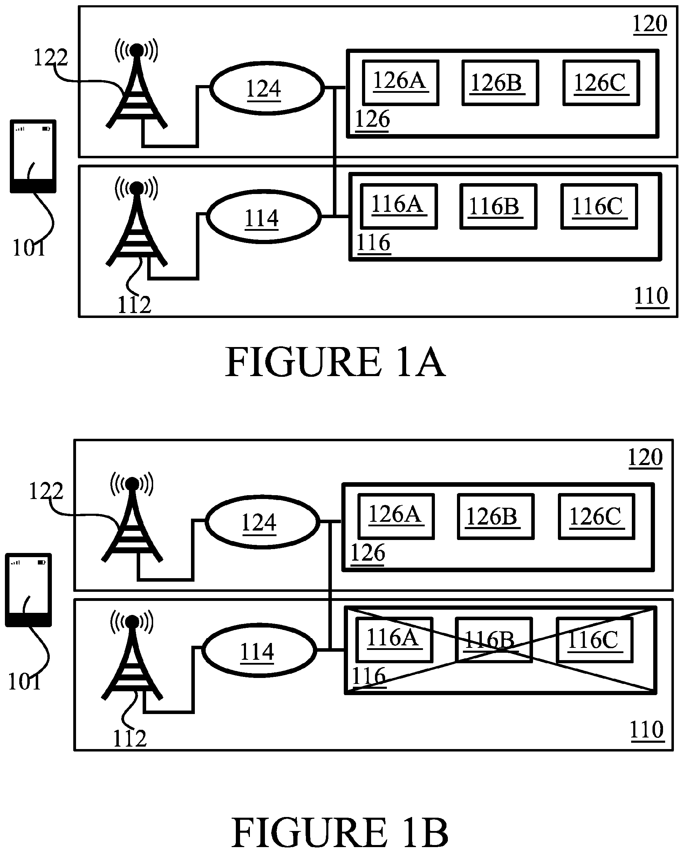

FIGURE 1A illustrates an example system in accordance with at least some embodiments of the present invention. A user equipment, UE, 101 may access one or more cellular networks. UE 101 may comprise any suitable user equipment type, such as a mobile phone, feature phone, smartphone, laptop computer, tablet computer, Internet of Things, IoT, node, machine-type communication node, a connected car connectivity module or a personal medical device, as examples. FIGURE 1A illustrates a first cellular network 110 and a second cellular network 120. A cellular network may also be referred to as an operator network, and a cellular network may be identified by a public land mobile network identifier, PLMN, identifier. Such a PLMN ID may comprise a mobile country code, MCC, and a mobile network code, MNC, for example.

First cellular network 110 comprises an access network 112, which may be a radio access network, RAN, for example. A RAN may comprise plural base stations, even hundreds or thousands of base stations, although a single base station is illustrated in FIGURE 1A for the sake of simplicity. In case the access network is not a RAN, it may be based on optical communication or wire-based communication, where access nodes may have sockets for wire-based communication, for example, and then the network could be referred to as a fixed access network rather than a cellular one. A RAN, for its part, may comprise nodes in addition to base stations, such as base station controllers or RAN intelligent controllers, RICs. Further, first cellular network 110 comprises a transport network 114 which connects access network 112 to a core network 116 of first cellular network 110. In principle transport network 114 may be any communication arrangement which enables communication of data and control information between access network 112 and core network 116.

Radio access networks may be based on a suitable cellular standard, such as wideband code division multiple access, WCDMA, long term evolution, LTE, or fifth generation, 5G, which is also known as new radio, NR. Further, 5G advanced may be used. These example cellular standards are governed and published by the 3^{rd} generation partnership project, 3GPP.

Core network 116 comprises plural core network nodes, of which core network nodes 116A, 116B and 116C are present in FIGURE 1A as examples. Of course, the number of core network nodes may exceed three. Core network nodes may be logical nodes, meaning that they are arranged to be run on one or more physical computing substrates, such that one or more than one logical core network node may run on a same physical computing substrate. Examples of core network nodes include a user plane function, UPF, a network exposure function, NEF, a policy control function, PCF, a unified data management, UDM, an application function, AF, an access and mobility function, AMF, an authentication server function, AUSF, a session management function, SMF, a service communication proxy, SCP, and a network slice selection function, NSSF.

A UPF provides an interconnect between mobile infrastructure and the data network, DN, providing encapsulation and decapsulation of a tunnelling protocol. A NEF provides, among other functions, secured exposure of network services towards 3rd party application over application programming interfaces, APIs. A PCF may determine the resources and services that can be used to support connected devices. A UDM may store subscription information and long-term security credentials of subscribers used in authentication. AFs provide service- or application-related information to network function service consumers. An AMF is a control plane function that handles connection and mobility management tasks. An AUSF may be tasked with responsibility for the security procedure for subscriber identity module, SIM, authentication. An SMF may be responsible for interacting with a decoupled data plane, creating, updating and removing protocol data unit, PDU, sessions and managing session context with a user plane function, UPF. An SCP may forward service requests to repository functions, for example. Finally, an NSSF may be configured to select a network slicing instance and determine an allowed network slice selection assistance information, NSSAI.

Normally both cellular networks 110, 120 may be configured to provide plural conventional network slices, separately. In other words, cellular network 110 may be configured with plural network slices which are each serviced by access network 112 and core network 116 of cellular network 110. Likewise cellular network 120 may be configured with plural network slices which each are serviced by access network 122 and core network 126 of cellular network 120. UEs, such as UE 101, may access the slices of cellular network 110 via access network 112, and UEs may access the slices of cellular network 120 via access network 122. Such slicing may be used to enhance a use rate of physical hardware in the cellular networks, and to enable introducing separately managed logical networks in the form of the slices without installing separate network hardware. Cellular networks 110, 120 may have a roaming agreement, enabling their respective subscribers to connect via each other's cellular networks. When connecting via a cellular network which is not a home network of a UE, the UE is said to be roaming.

Access networks may be configured to provide, for example by broadcasting in their respective cells, information to UEs concerning which network slices are accessible via this access network. In other words, the UEs may receive information, such as identifiers, of the network slices which the UE may connect to using the access network which provides the information. For example, such informing may take place in system information blocks, SIBs, which a base station broadcasts in a cell that it controls. The UE may then select from among the slices indicated as accessible, and request to be registered onto that selected slice, or to more than one slice.

Of note in FIGURE 1A is that transport network 114 is configured with a communication interface to core network 126, and transport network 124 is configured with a communication interface to core network 116. Core networks 116, 126 may separately be configured with gateways to enable communication between them and further networks. For example, base stations in RANs may be configured to initialize connections not only to the core network of the same cellular network as where the RAN is comprised, but also to a core network of another cellular network. For example, the base station(s) may be configured to initialize connections to core network of those cellular networks with whom their operator has configured an arrangement to start Core-Sharing Slices which are defined below, responsive to core failure.

FIGURE 1B illustrates an example system in accordance with at least some embodiments of the present invention. Like numbering denotes like structure as in FIGURE 1A. The situation illustrated in FIGURE 1B differs from that in FIGURE 1A in that the core network 116 of first cellular network 110 has been disabled, for example due to a cyberattack, natural disaster or intentional shutdown. In such a case, a UE may nonetheless obtain connectivity via access network 112, in case a network slice is available which is configured to be serviced by access network resources of access network 112 and core network resources of core network 126. In other words, this network slice is accessible via access network 112 and uses core network 126. In yet further words, this network slice is configured be serviced by an access network of first cellular network 110 and a core network of second cellular network 120. Such a network slice may be referred to as a Core-Sharing Slice, CSS. In principle, a slice serviced by access network 112 and core network 126 could be accessed, via access network 112, even if access network 122 is unavailable in addition to core network 116 being unavailable. Functioning RANs may exchange telemetry data, measurements and alarm data to facilitate roaming of UEs from one RAN to another in a core failure scenario.

Cellular networks 110, 120 may be configured to implement a CSS as a response to one of their core networks becoming unavailable. For example, these cellular networks may be configured to offer a CSS based on access network 112 and core network 126 as a response to core network 116 becoming unavailable, and/or to offer a CSS based on access network 122 and core network 116 as a response to core network 126 becoming unavailable. Thus a CSS may be run dynamically as a response to a fault situation. In some embodiments, an agreement to generate a CSS may be generated automatically by automated negotiation between the two cellular networks. This automated negotiation may determine settings and a configuration for the CSS, which may then be created automatically or by administrator configuration. The automated negotiation may relate to a statically or dynamically generated CSS. The automatic negotiation may be performed by operations support systems, OSS, and/or base station systems, BSS, of the respective networks.

Subscriber databases of core networks may be implemented in a fail-safe manner, enabling access to them even if their core network becomes unavailable in terms of serving subscribers. Such fail-safe operation may include mirroring to another site and/or redundant network access, for example. In some embodiments the subscriber database from a UE home network is used in authentication to a CSS, even if the home network's core network is otherwise unavailable.

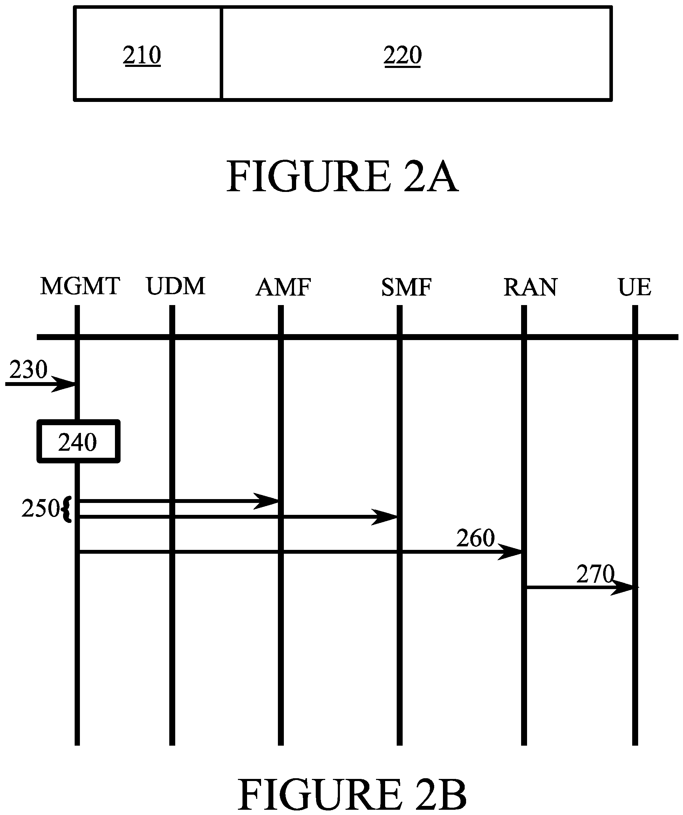

FIGURE 2A illustrates an example slice identifier in accordance with at least some embodiments of the present invention. A network slice selection assistance information, NSSAI, may be used as a slice identifier. This identifier may comprise two parts, a slice service type, SST, 210 and a slice differentiator, SD, 220. The SST and SD may be concatenated together to form the slice identifier, for example.

The slice identifier may indicate the identified slice is a CSS by defining a value of the SST as a core-sharing type slice. The SST may be 8 bits long, for example, which enables indicating many different slice types. Slice types in other than CSS, alternatively indicatable by the SST, include a high-performance machine-type communication slice, a mobile broadband type slice and an ultra-low latency communication slice. In these solutions, the UE may be configured to determine that the slice is a CSS by determining that the SST value in the slice identifier is a core-sharing type value.

Alternatively to, or in addition to, indicating in the SST that the slice is a CSS, it is possible to reserve values or value ranges in the SD as indicating the slice is a CSS. In these solutions, the UE may be configured to determine that the slice is a CSS by determining that the SD value in the slice identifier is a CSS-type value SD, or comprised in a CSS-type value range in the SD. The SD may be 24 bits long, for example, providing ample opportunity to reserve ranges or individual values to indicate CSS-type slices. There may be plural core-sharing slice types and corresponding core-sharing type SD values or value ranges, aimed for different uses, as will be discussed herein below

In some embodiments, the slice identifier may be capable of indicating more than one type of CSS, the different CSS having differing parameters. For example, in a natural disaster scenario a first CSS type may be reserved for first responders, which allows a higher bandwidth to enable video calls for telemedicine purposes, while a second CSS type may be intended for the general public, allowing a lowered bandwidth or even allowing only text message communication, to conserve scarce communication bandwidth. In other words, the different CSS types may be configured to allow different kinds of communication types. Communication types may include text only, text and audio, or text and audio and video.

CSS may be deployed statically, such that they are available already even when all core networks are available, or they may be deployed dynamically, for example responsive to failure or overloading of a core network. Service level agreement, SLA, and/or service level specification, SLS, settings of CSS may be shared between the operators of the participating cellular networks. They may thus be made aware of the characteristics of the CSS. For example, the maximum number of UEs is an attribute, which could be set for a CSS that both operators could set a common value for. A network slice management function, NSMF, may determine to deploy a network slice which is serviced by an access network of a first cellular network and a core network of a second cellular network, and configure the network slice to an active state in the access network of the first cellular network and the core network of the second cellular network.

The respective operator of cellular networks participating in a CSS may configure their core network nodes: UDM, AMF, SMF, UPF and NSSF when they deploy a CSS so that these core-network nodes can recognize and support the CSS slice identifier(s) during operation. The core-network nodes UDM, AMF, SMF, UPF and NSSF may be configured to offer run-time service to a CSS in the following way. The UDM may access shared subscription data from a shared database. This will allow the UDM to validate UE subscriptions from another operator. The AMF may recognize CSS and work with the UDM to allow a UE from the other operator to pass registration. An SMF may establish packet data unit, PDU, sessions and check subscription data from the shared database. A UPF may host user plane data connections. To enable this, base stations in RANs may be configured to be connected with each cellular network's core network. For example, base stations may connect to an AMF in each of two participating core networks. Base stations of a RAN are capable of determining if the core network of their own cellular network has become unavailable, and to responsively recommend UEs use CSS to access connectivity. Such recommendation may be provided as broadcast indications, for example broadcasted in the system information block(s), SIB.

FIGURE 2B illustrates a signalling diagram in accordance with at least some embodiments of the present invention. On the vertical axes are disposed from the left to the right, a management layer MGMT, a UDM, an AMF, an SMF, a RAN and finally a UE. Time advances from the top toward the bottom. The signalling flow of FIGURE 2B leads to establishment of a CSS.

In phase 230, the management layer receives a request to deploy a CSS. This request may originate in a human administrator or an automated trigger, such as one responding to a core network fault, for example. In phase 240, the management layer deploys the requested CSS-type slice based on parameters configured in advance or negotiated responsive the message of phase 230. The parameters may include, for example, slice coverage area, for example in terms of cells, a maximum number of UEs, isolation requirements and maximum bandwidth. In phase 250 the management layer configures core network functions, such as AMF, SMF, UPF to service the new CSS. This may be triggered by configuring the AMF to configure the other core network nodes, for example.

In phase 260 the management layer configures the RAN of the cellular network to service the new CSS. This includes providing a slice identifier of the CSS to the RAN nodes, such as base stations. In response, phase 270, the base stations will begin indicating the slice identifier to UEs in cells controlled by these base stations as an identifier of a slice that is accessible via the respective base station. The providing of phase 270 may be broadcasting, such as in SIB(s), wherein broadcasting means wireless transmission which is not addressed to a particular recipient node.

In a normal network, the RAN broadcasts the PLMN ID of the cellular network. The core network nodes of this cellular network are associated with the PLMN ID of this cellular network. So, the PLMN IDs of the RAN broadcast and the core-network elements used, such as AMF and UDM, match. In the CSS case, the RAN is connected to two distinct core networks, and the RAN may broadcast PLMN IDs of both cellular networks, so that the UE is well informed of the situation. Two operators may seek to share RAN resources, so the RAN broadcasts the PLMNs that it can support, the UE subscription data identifies a preferred PLMN ID, such as the home PLMN ID.

Three example scenarios present themselves. Firstly, a UE may register in cellular network 120 with the RAN broadcasting PLMN of cellular network 120. Then the core network of cellular network 120 fails. A CSS slice here may have core resources from cellular network 110 AMF and cellular network 120 UDM, and uses a PLMN ID of cellular network 110 while using the RAN of cellular network 120. It may use cellular network 110 AMF and cellular network 120 UDM.

Secondly, a UE may register to cellular network 120 RAN network with base stations therein broadcasting PLMN ID of cellular network 120. Then, cellular network 120's core network goes down. The RAN could switch to broadcasting the PLMN ID of cellular network 110, and the CSS slice may use core resources from cellular network 110 and cellular network 120 UDM, with PLMN ID of cellular network 110.

Thirdly, a UE may register to cellular network 120 RAN network with base stations broadcasting PLMN ID of cellular network 120. Then, cellular network 120's core network goes down. The CSS may use serving network-name, SNN, for authentication and generation of keys. This SN-name, SNN, identifies the CSS instance and is defined with a CSS identifier. The CSS identifier may be used by both cellular network 110 and 120 AMFs and cellular network 120 UDM. The SN-Name may be a concatenation of a service code and the serving network identity, SN Id. The SNN identifies the serving PLMN or standalone NPN.

Concerning security features, if a 5G authentication algorithm is used, the authentication algorithm must be allowed in the UDM. In the 5G AKA authentication algorithm, the new SNN identifier needs to be configured to the UE to access the CSS slice. The SNN is used in 5G as one input to a key generation algorithm. In terms of signalling, the SNN specific to the CSS slice is conveyed in an authentication request from AMF to AUSF, and in authentication request from AUSF to the UDM.

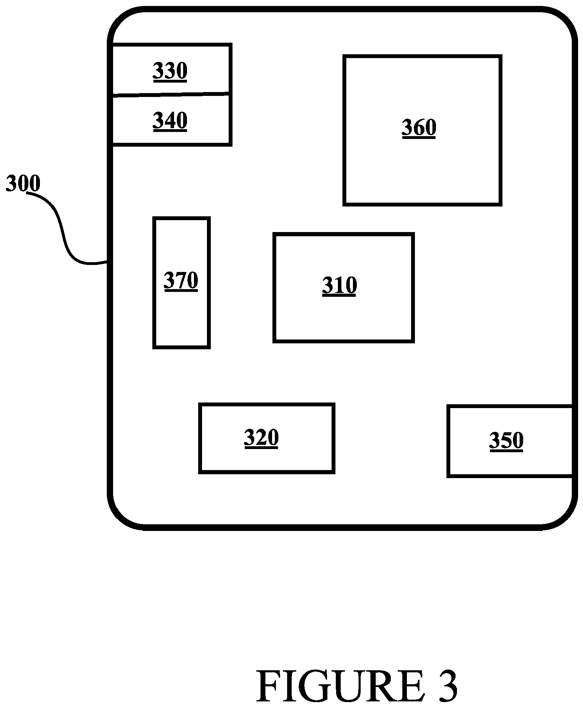

FIGURE 3 illustrates an example apparatus capable of supporting at least some embodiments of the present invention. Illustrated is device 300, which may comprise, for example, a mobile communication device such as UE 101 of FIGURE 1A or FIGURE 1B. Alternatively, in applicable parts device 300 may correspond to an access node, such as a base station, or to a device running a core network node. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. When processor 310 comprises more than one processor, device 300 may be a distributed device wherein processing of tasks takes place in more than one physical unit. Processor 310 may be a control device. A processing core may comprise, for example, a Cortex-A8 processing core manufactured by ARM Holdings or a Zen processing core designed by Advanced Micro Devices Corporation. Processor 310 may comprise at least one Qualcomm Snapdragon and/or Intel Atom processor. Processor 310 may comprise at least one application-specific integrated circuit, ASIC. Processor 310 may comprise at least one field-programmable gate array, FPGA. Processor 310 may be means for performing method steps, such as receiving, determining, providing and requesting, in device 300. Processor 310 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analogue and/or digital circuitry, and (b) combinations of hardware circuits and software, such as, as applicable: (i) a combination of analogue and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 300 may comprise memory 320. Memory 320 may comprise random-access memory and/or permanent memory. Memory 320 may comprise at least one RAM chip. Memory 320 may be a computer readable medium. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300. Memory 320 may be transitory or non-transitory. The term "non-transitory", as used herein, is a limitation of the medium itself (that is, tangible, not a signal) as opposed to a limitation on data storage persistency (for example, RAM vs. ROM).

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver. Transmitter 330 and/or receiver 340 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example.

Device 300 may comprise a near-field communication, NFC, transceiver 350. NFC transceiver 350 may support at least one NFC technology, such as NFC, Bluetooth, Wibree or similar technologies.

Device 300 may comprise user interface, UI, 360. UI 360 may comprise at least one of a display, a keyboard, a touchscreen, a vibrator arranged to signal to a user by causing device 300 to vibrate, a speaker or a microphone. A user may be able to operate device 300 via UI 360, for example to accept incoming telephone calls, or configure network slicing parameters.

Device 300 may comprise or be arranged to accept a user identity module 370. User identity module 370 may comprise, for example, a subscriber identity module, SIM, card installable in device 300. A user identity module 370 may comprise information identifying a subscription of a user of device 300. A user identity module 370 may comprise cryptographic information usable to verify the identity of a user of device 300 and/or to facilitate encryption of communicated information and billing of the user of device 300 for communication effected via device 300.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver.

Device 300 may comprise further devices not illustrated in FIGURE 3. For example, where device 300 comprises a smartphone, it may comprise at least one digital camera. Some devices 300 may comprise a back-facing camera and a front-facing camera, wherein the back-facing camera may be intended for digital photography and the front-facing camera for video telephony. Device 300 may comprise a fingerprint sensor arranged to authenticate, at least in part, a user of device 300. In some embodiments, device 300 lacks at least one device described above. For example, some devices 300 may lack a NFC transceiver 350 and/or user identity module 370.

Processor 310, memory 320, transmitter 330, receiver 340, NFC transceiver 350, UI 360 and/or user identity module 370 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

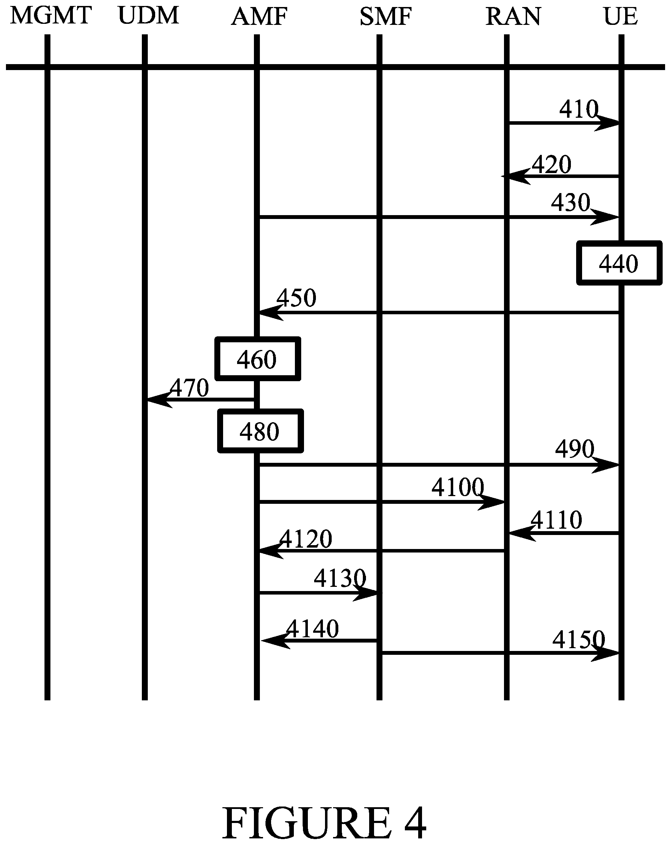

FIGURE 4 illustrates signalling in accordance with at least some embodiments of the present invention. The vertical axes correspond to those of FIGURE 2B. As in FIGURE 2B, time advances from the top toward the bottom.

In phase 410, the RAN, in detail base stations therein, broadcast the PLMN identifier of the cellular network, as well as other indicators. The UE requests to be registered in the cellular network in phase 420. In phase 430, the AMF configures one, and in some embodiments up to eight, slice identifiers to the UE registration access. Responsively, the UE selects, phase 440, a PLMN or non-public network, NPN, for registration. Based on this selection, the UE requests registration, via the RAN, in phase 450. The request for the apparatus to be registered, of phase 450, also comprises a slice identifier the UE has chosen in phase 440. This may be a CSS, for example. Indeed, the RAN may provide to the UE a recommendation to select a CSS, in case the RAN knows the core network of the cellular network has become unavailable.

In phase 460 the AMF checks the slice identifier provided by the UE is valid and determines, optionally, whether admitting the UE to the CSS would violate a maximum UE number limitation of the CSS. If this is not the case, processing advances to phase 470. In phase 470, the AMF fetches subscription data from the UDM. This may be a UDM of the failed core network of the home cellular network of the UE, for example. This could be possible, in case the subscriber information is redundantly stored so as to make the subscriber repository of the home network core network resistant to core network failure.

Subsequently, in phase 480, the AMF gets network slice instance, NSI, identifier and allowed slice identifier from a NSSF. In phase 490, a registration accept message is provided to the UE via the RAN. The registration accept may include indication of the slice identifiers to which the UE has been admitted, as well as possible mobility restrictions in force. Likewise, in phase 4100, the AMF provides the allowed slice identifiers to the RAN.

In phase 4110, the UE requests PDU session establishment from the RAN. The CSS slice identifier may be provided in this request. The RAN responsively requests, phase 4120, the PDU session establishment from the AMF, which responsively gets a list of SMF addresses for a given NSI and selects one SMF for the PDU session. In phase 4130, the AMF requests PDU session creation from the selected SMF, which responsively may check subscription data, policies and load information, for example, and create a PDU context for the PDU session. In phase 4140 the SMF sends a PDU session establishment accept message to the AMF, this message comprising the slice identifier of the CSS. Likewise, phase 4150 comprises the SMF sending a PDU session establishment accept, with CSS identifier, to the UE via the RAN. Subsequently, the UE may request a user-plane connection establishment from a UPF, for example.

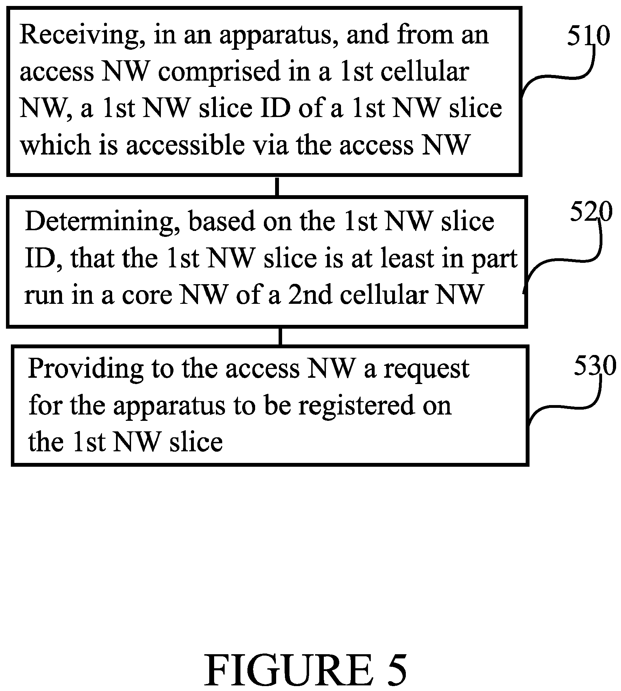

FIGURE 5 is a flow graph of a method in accordance with at least some embodiments of the present invention. The phases of the illustrated method may be performed in UE 101, or in a control device configured to control the functioning thereof, when installed therein.

Phase 510 comprises receiving, in an apparatus and from an access network comprised in a first cellular network, a first network slice identity of a first network slice which is accessible via the access network. Phase 520 comprises determining, based on the first network slice identity, that the first network slice is in part serviced in a core network of a second cellular network. Finally, phase 530 comprises providing to the access network a request for the apparatus to be registered on the first network slice.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

### INDUSTRIAL APPLICABILITY

At least some embodiments of the present invention find industrial application in operating cellular communication networks.

### ACRONYMS LIST

- CSS: Core Sharing Slice
- SST: slice service type
- SD: slice differentiator

**REFERENCE SIGNS LIST**

| | |
|---|---|
| 101 | user equipment, UE |
| 110 | first cellular network |
| 112, 122 | access network |
| 114, 124 | transport network |
| 116, 126 | core network |
| 116A, 116B, 116C, 126A, 126B, 126C | core network node |
| 210 | slice service type |
| 220 | slice differentiator |
| 230 - 270 | phases of signalling in FIGURE 2B |
| 300 - 370 | structure of the device of FIGURE 3 |
| 410 - 4150 | phases of signalling in FIGURE 4 |
| 510 - 530 | phases of the method of FIGURE 5 |

## Claims

1. An apparatus comprising means for:
- receiving, in an apparatus and from an access network comprised in a first cellular network, a first network slice identity of a first network slice which is accessible via the access network;
- determining, based on the first network slice identity, that the first network slice is in part serviced in a core network of a second cellular network, and
- providing to the access network a request for the apparatus to be registered on the first network slice.

2. The apparatus according to claim 1, wherein the means for determining that the first network slice is at least in part serviced in a core network of a second cellular network is based on determining that the first network slice identity, S-NSSAI, comprises a slice service type, SST, or slice differentiator, SD, which indicates that the first network slice uses core network resources and an access network resources of differing cellular networks.

3. The apparatus according to claim 1 or 2, further comprising means for requesting from the access network that the apparatus maintain a registered state on a second network slice at the same time as the apparatus maintains the registered state on the first network slice.

4. The apparatus according to any of claims 1 - 3, further comprising means for performing the providing of the access request as a response to determining that the access network sends an indication to the apparatus.

5. The apparatus according to claim 4, wherein the indication indicates that at least one network slice supported by the access network has become unavailable.

6. The apparatus according to claim 5, wherein the at least one network slice that has become unavailable is configured to use core network resources of the first cellular network.

7. A method comprising:
- receiving, in an apparatus and from an access network comprised in a first cellular network, a first network slice identity of a first network slice which is accessible via the access network;
- determining, based on the first network slice identity, that the first network slice is in part serviced in a core network of a second cellular network, and
- providing to the access network a request for the apparatus to be registered on the first network slice.

8. The method according to claim 7, wherein the method comprises performing the determining that the first network slice is at least in part serviced in a core network of a second cellular network based on determining that the first network slice identity, S-NSSAI, comprises a slice service type, SST, or slice differentiator, SD, which indicates that the first network slice uses core network resources and an access network resources of differing cellular networks.

9. The method according to claim 7 or 8, wherein method comprises requesting from the access network that the apparatus maintain a registered state on a second network slice at the same time as the apparatus maintains the registered state on the first network slice.

10. The method according to any of claims 7 - 9, wherein the method comprises performing the providing of the access request as a response to determining that the access network sends an indication to the apparatus.

11. The method according to claim 10, wherein the indication indicates that at least one network slice supported by the access network has become unavailable.

12. The method according to claim 11, wherein the at least one network slice that has become unavailable is configured to use core network resources of the first cellular network.

13. A non-transitory computer readable medium having stored thereon a set of computer readable instructions that, when executed by at least one processor, cause an apparatus to at least:
- receive, from an access network comprised in a first cellular network, a first network slice identity of a first network slice which is accessible via the access network;
- determine, based on the first network slice identity, that the first network slice is in part services in a core network of a second cellular network, and
- provide to the access network a request for the apparatus to be registered on the first network slice.
